# EUROPÄISCHE PATENTANMELDUNG

(11) **EP 3 929 885 A1**
(43) Veröffentlichungstag der Anmeldung: **29.12.2021**
(21) Anmeldenummer: 20182624.5
(22) Anmeldetag: 26.06.2020
(51) Int. Cl.: G07C 9/37, G07C 9/38, G05B 15/02, G10L 17/26, E05F 1/00

(54) **VERFAHREN FÜR DIE GEBÄUDEAUTOMATION**

(71) Anmelder: GIRA GIERSIEPEN GmbH & Co. KG, 42477 Radevormwald (DE)
(72) Erfinder: Pees, Stefan, 51465 Bergisch Gladbach (DE)
(74) Vertreter: Angerhausen, Christoph

(57) **Zusammenfassung**

Die Erfindung betrifft ein Verfahren für die Gebäudeautomation, das das Aufnehmen eines akustischen Signals über ein Mikrofon (1) eines Gebäudeautomationssystems (2), und das Auswerten des akustischen Signals auf das Vorliegen mindestens eines akustischen Fingerabdrucks aufweist, wozu das aufgenommene Signal auf eine Übereinstimmung mit in einer Datenbank (3) des Gebäudeautomationssystems (2) hinterlegten, jeweils einem akustischen Fingerabdruck zugeordneten Referenzsignalen abgeglichen wird. Bei einem bei dem Auswerten erkannten akustischen Fingerabdruck wird mindestens ein dem erkannten akustischen Fingerabdruck zugeordneter Steuerbefehl an einen Sensor (4) oder Aktor (5) des Gebäudeautomationssystems (2) weitergeleitet. Es wird weiterhin ein entsprechendes Gebäudeautomationssystems beschrieben.

## Beschreibung

Die Erfindung betrifft ein Verfahren für die Gebäudeautomation, das das Aufnehmen eines akustischen Signals in einem Raum eines Gebäudes über einen akustischen Sensor, etwa ein Mikrofon, eines Gebäudeautomationssystems aufweist. Das Verfahren weist weiterhin das Auswerten des akustischen Signals auf das Vorliegen mindestens eines akustischen Fingerabdrucks auf, wozu das aufgenommene Signal auf eine Übereinstimmung mit in einer Datenbank des Gebäudeautomationssystems hinterlegten, jeweils einem akustischen Fingerabdruck zugeordneten Referenzsignalen abgeglichen wird. Der akustische Fingerabdruck kann dazu verwendet werden, eine bestimmte Person eindeutig zu identifizieren, oder lediglich die Präsenz irgendeiner Person oder Personengruppe zu identifizieren.
Die DE 10 2015 205 251 A1 beschreibt ein System zur Erfassung eines akustischen Signals, das Detektieren eines Geräuschs in dem erfassten akustischen Signal und das Vergleichen des detektierten Geräuschs mit gespeicherten Geräuschen, wobei jedem gespeicherten Geräusch ein Steuerbefehl zugeordnet ist. Es wird weiterhin das Ausgeben des dem selektierten Geräusch zugeordneten Steuerbefehls beschrieben.

Die EP 2 816 554 A2 beschreibt ein Verfahren zur Identifizierung von Personen über Sprachbefehle sowie eine Sprachsteuerung und ein entsprechendes Gerät, welches dazu eingerichtet ist, die Stimme eines Anwenders zu empfangen. Empfangene Sprachbefehle können anschließend gefiltert und hinsichtlich charakteristischer Attribute und Eigenschaften analysiert werden. Ein Prozessor ist dazu vorgesehen, die Attribute mit abgespeicherten Attributen zu vergleichen und damit einen Anwender zu identifizieren.

Die US 2018/0293981 A1 offenbart ein weiteres Verfahren zur Identifizierung eines Anwenders anhand dessen Stimme sowie eine Spracherkennung. Die Benutzeridentifizierung kann mittels Korrelation mit hinterlegten Sprachfingerabdrücken und durch die Berechnung eines Übereinstimmungsgrades erfolgen.

Ähnliche Verfahren sind auch in der US 2017/0351387 A1 und in der US 2007/0136058 A1 beschrieben.

Bei den aus dem Stand der Technik bekannten Gebäudeautomationssystemen erfolgt die Interaktion eines Anwenders mit dem Automationssystem in der Regel durch die Betätigung zentraler oder dezentraler Eingabegeräte, beispielsweise Tastsensoren, zentraler Bedieneinheiten oder gegebenenfalls auch ein tragbares Bediengerät, beispielsweise ein Smartphone. Aufgrund der vielfältigen Funktionen, die moderne Gebäudeautomationssysteme aufweisen, bedingt durch das Bestreben, immer mehr Aktorik eines Gebäudes einerseits vorzusehen und andererseits über das Gebäudeautomationssystem ansteuerbar zu implementieren, wird die Bedienung des Gebäudeautomationssystems für den Anwender immer komplizierter. Insbesondere hat sich herausgestellt, dass jeder einzelne Anwender für sich genommen in der Regel lediglich einen sehr beschränkten Teilfunktionsumfang des Gesamtfunktionsumfangs des Gebäudeautomationssystems in Anspruch nimmt, woraus der Wunsch entstanden ist, dem Anwender eine für seine Gewohnheiten spezifische Bedienung des Gebäudeautomationssystems mit gegebenenfalls beschränktem oder vorselektiertem Funktionsumfang zur Verfügung zu stellen.

Es ist daher die Aufgabe der Erfindung, ein Verfahren für die Gebäudeautomation vorzuschlagen, welches eine anwenderfreundliche Bedienung ermöglicht.

Diese Aufgabe wird durch ein Verfahren mit den Merkmalen des Anspruchs 1 gelöst. Ein entsprechendes Gebäudeautomationssystem ist Gegenstand des Patentanspruchs 13. Die abhängigen Ansprüche betreffen jeweils vorteilhafte Ausführungsformen der Erfindung.

Demgemäß ist bei dem Verfahren für die Gebäudeautomation vorgesehen, dass bei einem bei dem Auswerten erkannten akustischen Fingerabdruck auf die Präsenz einer Person in dem Raum geschlossen und eine die Personenpräsenz repräsentierende Information in einer Datenbank des Gebäudeautomationssystems hinterlegt wird.

Die in der Datenbank hinterlegte Informationen zur Personenpräsenz kann unmittelbar oder zeitverzögert für die Ansteuerung des Gebäudeautomationssystems genutzt werden. Über den akustischen Fingerabdruck kann eine bestimmte Person eindeutig identifiziert sein. Der akustische Fingerabdruck kann aber auch darauf ausgelegt sein, anstelle einer spezifischen Person die Zugehörigkeit der Person zu einer Gruppe von Personen zu identifizieren. Grundsätzlich ist es jedoch möglich, neben der Spracherkennung beispielsweise auch unmittelbar von einer Person verursachte, jedoch nicht von der menschlichen Stimme erzeugte Geräusche, beispielsweise Trittgeräusche, die Interaktion einer Person mit einem Gegenstand, etwa einem Fenster oder einer Tür und dergleichen für die Erkennung einer spezifischen Person, mithin als akustischen Fingerabdruck zu verwenden, der den eindeutigen Rückschluss auf eine bestimmte Person erlaubt. Auch diese Geräusche können als akustische Fingerabdrücke im Sinne der Erfindung dienen.

Bei einem erkannten akustischen Fingerabdruck kann mindestens ein dem erkannten akustischen Fingerabdruck zugeordneter Steuerbefehl unmittelbar an einen Sensor oder Aktor des Gebäudeautomationssystems weitergeleitet oder in der Datenbank zwischengespeichert und zu einem späteren Zeitpunkt an den Sensor oder den Aktor weitergeleitet werden. Die Information über den erkannten akustischen Fingerabdruck kann jedoch auch lediglich als eine von mehreren bei der Erzeugung des Steuerbefehls berücksichtigten Informationen in einem unmittelbar folgenden oder zeitlich beabstandet folgenden Schritte zur Erzeugung des Steuerbefehls berücksichtigt werden.

Es ist somit einerseits möglich, dass dem akustischen Fingerabdruck unmittelbar mindestens ein eindeutiger, vorgegebener Steuerbefehl zugeordnet ist, welcher durch das Erkennen des akustischen Fingerabdrucks ausgelöst und an den Sensor oder Aktor des Gebäudeautomationssystems weitergeleitet wird. Andererseits ist ebenso denkbar, dass der akustische Fingerabdruck lediglich mit einer Information verknüpft ist, beispielsweise die Präsenz einer (bestimmten) Person betreffend, wobei diese Information, unverzüglich oder zeitverzögert in Bezug auf die Erkennung des Fingerabdrucks, in die Erzeugung eines Steuerbefehls in einem separaten Schritt einbezogen werden kann.

Der akustische Fingerabdruck ist grundsätzlich auf keine bestimmten akustisch detektierbaren Fingerabdrücke beschränkt und muss sich insbesondere nicht zwangsläufig aus der Auswertung von Sprachbefehlen ergeben. Beispielsweise kann vorgesehen sein, dass der akustische Fingerabdruck das für eine Person akustische Trittgeräusch ist, das von dem Mikrofon des Gebäudeautomationssystems erfasst werden kann, wenn die betreffende Person beispielsweise einen Raum betritt, in welchem das Mikrofon angeordnet ist. Das Verfahren für die Gebäudeautomation kann beispielsweise vorsehen, dass bei einem über sein individuelles Schrittgeräusch oder einen anderen akustischen Fingerabdruck identifizierten Anwender mindestens ein Steuerbefehl zur Ansteuerung mindestens eines Sensors oder eines Aktors des Gebäudeautomationssystems erzeugt und über das Gebäudenetzwerk zur Ansteuerung des Sensors oder Aktors verteilt wird.

Aus dem Stand der Technik ist die sogenannte Szenensteuerung des Gebäudeautomationssystems bekannt, bei dem in der Regel mehrere Steuerbefehle zur Ansteuerung mehrerer Sensoren und/oder Aktoren zusammengefasst sind, um eine anwenderabhängig bevorzugte Ansteuerung des Gebäudeautomationssystem zu erreichen, beispielsweise eine bestimmte Ansteuerung von Lichtquellen zur Erzeugung einer Lichtstimmung, die Ansteuerung von Beschattungsaktorik, usw. Bei einer Ausführungsform der Erfindung kann nunmehr vorgesehen sein, dass der erkannte akustische Fingerabdruck mit einer Gruppe von Steuerbefehlen verknüpft ist, so dass beispielsweise bei dem Betreten eines Raums durch eine bestimmte Person, deren Trittgeräusche den hinterlegten akustischen Fingerabdruck aufweisen, eine personenspezifische Ansteuerung des Gebäudeautomationssystems erreicht wird.

Die zuvor beschriebenen Ausführungsformen sind nicht auf die als akustischer Fingerabdruck erkennbaren Trittgeräusche einer Person beschränkt. Es sind auch andere akustische erfassbare biometrische Merkmale einer Person auswertbar, beispielsweise die Stimmfarbe eines Anwenders. Dies ermöglicht es insbesondere auch, dass selbst in dem Fall, dass sich mehrere Personen in dem Raum des Gebäudeautomationssystems, in welchem sich das Mikrofon befindet, aufhalten, gegebenenfalls nur die akustischen biometrischen Merkmale einer für die Ansteuerung des Gebäudeautomationssystem autorisierten Person, beispielsweise deren Schrittgeräusche als akustischer Fingerabdruck in dem Gebäudeautomationssystem hinterlegt sind, erkannt werden, um das Gebäudeautomationssystem entsprechend anzusteuern. Sollte der Fall eintreten, dass sich mehrere über jeweils einen spezifischen akustischen Fingerabdruck von dem Gebäudeautomationssystem unabhängig voneinander erkennbare Personen in einem Raum befinden, in welchem das Mikrofon angeordnet ist, kann über das Gebäudeautomationssystem eine Hierarchie hinterlegt sein, welche dazu eingerichtet ist, die Ansteuerung des Gebäudeautomationssystems beispielsweise nach einem in der Hierarchie am höchsten angeordneten akustischen Fingerabdruck auszurichten.

Sämtliche Verfahrensschritte des Auswertens des akustischen Signals können auf einer lokalen Datenbank des Gebäudeautomationssystems durchgeführt werden. Sowohl der Umstand, dass das erfindungsgemäße Gebäudeautomationssystems für die Erkennung individueller Anwender keine Bilddaten wie Fotos verwendet, sondern stattdessen akustische Fingerabdrücke, als auch der Umstand, dass zumindest bei einer Ausführungsform der Erfindung das Verfahren auf einer lokalen Datenbank des Gebäudeautomationssystems, beispielsweise auf einem Home Server des Gebäudeautomationssystems ohne IP-Anbindung an die Außenwelt, durchgeführt werden kann, tragen dazu bei, dass durch das beschriebene Verfahren trotz seiner personenspezifischen Ansteuerlogik der Datenschutz gewahrt ist.

Die aus dem Stand der Technik bekannten Verfahren zur Erkennung von Personen verwenden Bilddaten der Person, insbesondere Fotos oder Videoaufnahmen des Gesichts, was die entsprechenden datenschutztechnischen Nachteile mit sich bringt. Darüber hinaus sind aus dem Stand der Technik Zutrittskontrollsysteme bekannt, bei denen der Fingerabdruck einer Person erfasst wird. Auch dies ist datenschutztechnisch nicht unbedenklich. Darüber hinaus ist die Verwendung von Kamerabildern für die Personenidentifizierung auch insofern nachteilig, als dass die Auswertung dieser Bilddaten sehr rechenintensiv ist und deshalb in der Regel auf Embedded-Geräten, das heißt Geräten, die unmittelbarer Bestandteil des Gebäudeautomationssystems sind, kaum durchführbar ist. Demgemäß bedürfen diese Verfahren stets, dass die erzeugten Bilddaten dezentral, beispielsweise Cloud-basiert ausgewertet werden, wozu das Gebäudeautomationssystem eine IP-Anbindung zur Außenwelt aufweisen muss. Darüber hinaus ist die Erzeugung und Verarbeitung von Fotos, die Gesichter zeigen, aus der Sicht des Datenschutzes problematisch und stellt nach der geltenden Rechtslage einen signifikanten Eingriff in die Privatsphäre der betroffenen Person dar. Die genannten Nachteile können durch die erfindungsgemäße Lehre ausgeräumt werden.

Das Verfahren kann das Erzeugen mindestens eines Benutzerprofils aufweisen, das über den akustischen Fingerabdruck eindeutig identifiziert ist. Dabei kann das Erzeugen des Benutzerprofils das Aufnehmen des akustischen Signals über das Mikrofon und das Zuordnen des aufgenommenen Signals zu mindestens einem Steuerbefehl aufweisen. Der Steuerbefehl kann beispielsweise eine Vielzahl Steuerbefehle aufweisen. Der mindestens eine Steuerbefehl ist für die Ansteuerung mindestens eines Sensors und/oder Aktors des Gebäudeautomationssystems eingerichtet. Beispielsweise kann das Benutzerprofil die zuvor beschriebene Szenensteuerung aufweisen, bei der eine Vielzahl Steuerbefehle zur Ansteuerung der Sensorik und Aktorik des Gebäudeautomationssystems zusammengefasst sein können.

Das Verfahren kann das Auswählen eines Benutzerprofils aufweisen, wozu über das Mikrofon das den akustischen Fingerabdruck aufweisende akustische Signal aufgenommen wird, das das Benutzerprofil eindeutig identifiziert.

Das Erzeugen des Benutzerprofils kann das Zuordnen des aufgenommenen akustischen Signals zu mindestens einem Steuerbefehl und vorzugsweise zu einer Mehrzahl Steuerbefehle zur Ansteuerung mindestens eines Sensors und/oder Aktors des Gebäudeautomationssystems aufweisen. Das Verfahren kann dabei weiterhin nach dem Auswählen eines Benutzerprofils das Auswählen mindestens eines der Mehrzahl Steuerbefehle über einen Sprachbefehl aufweisen.

Bei einer besonders vorteilhaften Ausführungsform der Erfindung ist vorgesehen, dass das Verfahren das Zuweisen eines Sprachbefehls zu dem mindestens einen Benutzerprofil aufweist. Dies ermöglicht es, dass nach dem Auswählen eines Benutzerprofils das Auswählen mindestens eines der Mehrzahl Steuerbefehle über einen Sprachbefehl erfolgt, wobei das Auswählen das Auswerten des Sprachbefehls unter Zugrundelegung des Sprachprofils aufweist. Dadurch wird die Erkennbarkeit der Sprachbefehle deutlich verbessert, wodurch die Hardware des Gebäudeautomationssystems, beispielsweise das Mikrofon oder die für die Auswertung verwendete Rechenkapazität entsprechend weniger leistungsstark ausgelegt werden kann.

Insbesondere in größeren Räumen, welche lediglich ein Mikrofon aufweisen, kann je nach Position des Anwenders im Raum in Bezug auf das Mikrofon die von dem Mikrofon empfangene Sprachqualität gering sein. Um eine treffsichere Erkennung des Sprachbefehls zu erzielen, ist daher bei einer Ausführungsform der Erfindung vorgesehen, dass der akustische Fingerabdruck dazu verwendet wird, ein personenspezifisches Sprachprofil zu aktivieren, unter Zugrundelegung welches ein (erwarteter) Sprachbefehl, der von der über den akustischen Fingerabdruck identifizierten Person abgegeben wird, ausgewertet wird.

Das Aufnehmen eines akustischen Signals kann das Aufnehmen einen Störsignals mit einem unspezifischen Frequenzspektrum aufweisen, beispielsweise ein Umgebungsrauschen etwa ein Verkehrsrauschen. Zu dem Störsignal kann kein übereinstimmendes Referenzsignal in der Datenbank hinterlegt sein. Dabei kann bei dem Überschreiten einer Schwellsignalamplitude des Störsignals ein Tür- oder Fensteraktor des Gebäudeautomationssystems dazu angesteuert werden, mindestens eine Tür und/oder mindestens ein Fenster des Gebäudeautomationssystems zu schließen, wodurch eine Verringerung zumindest der Amplitude des Störsignals und dadurch eine Verbesserung der erzielbaren Ergebnisse bei der Auswertung des akustischen Signals erreicht werden kann.

Nach dem Schließen kann verifiziert werden, ob eine Signalamplitude des Störsignals die Schwellsignalamplitude unterschreitet oder zumindest geringer als vor dem Schließen ist.

Dabei kann vorgesehen sein, dass in dem Fall, dass die Signalamplitude des Störsignals die Schwellsignalamplitude unterschreitet, keine weitere Ansteuerung des mindestens einen Tür- oder Fensteraktors erfolgt und das mindestens eine Fenster oder die mindestens eine Tür geschlossen gehalten wird.

Ebenso kann vorgesehen sein, dass in dem Fall, dass die Signalamplitude des Störsignals die Schwellsignalamplitude nicht unterschreitet, jedoch geringer geworden ist, mindestens ein weiterer Tür- oder Fensteraktor des Gebäudeautomationssystems dazu angesteuert wird, sukzessive eine weitere Tür und/oder mindestens ein weiteres Fenster des Gebäudeautomationssystems zu schließen, bis die Signalamplitude des Störsignals die Schwellsignalamplitude unterschreitet.

Schließlich kann vorgesehen sein, dass in dem Fall, dass die Signalamplitude des Störsignals nach dem Schließen nicht oder nicht wesentlich geringer als vor dem Schließen ist, der für das Schließen angesteuerte Aktor angesteuert wird, die mindestens eine Tür und/oder das mindestens ein Fenster des Gebäudeautomationssystems wieder zu öffnen.

Bei dem Auswerten des akustischen Fingerabdrucks kann ein akustischer Fingerabdruck, vorzugsweise ein Schrittgeräusch erkannt werden, dem eine Gruppe von mehreren Steuerbefehlen aus einer Vielzahl möglicher Steuerbefehle zugeordnet ist. Dabei können die mehreren Steuerbefehle aus der Vielzahl möglicher Steuerbefehle vorausgewählt werden. Nach dem Erkennen des akustischen Fingerabdrucks kann ein Sprachbefehl ausgewertet werden, über den mindestens einer der mehreren Steuerbefehle aus der Vielzahl möglicher Steuerbefehle ausgewählt wird.

Das Abgleichen des aufgenommenen akustischen Signals kann das Transformieren des aufgenommenen akustischen Signals in den Bildbereich und das Vergleichen des in den Bildbereich transformierten Signals mit einem in den Bildbereich transformierten Referenzmuster des Referenzsignals aufweisen.

Das Abgleichen des aufgenommenen akustischen Signals kann das Korrelieren des Signals oder eines daraus in den Bildbereich transformierten Signals mit in den Bildbereich transformierten Referenzmustern der Referenzsignale aufweisen, von denen zur Bestimmung des Referenzsignals das Referenzmuster mit der größten Übereinstimmung mit dem in den Bildbereich transformierten akustischen Signal ermittelt wird.

Das Referenzsignal sowie gegebenenfalls ein daraus in den Bildbereich transformiertes Referenzmuster kann ein Referenzsignal bzw. Referenzmuster sein, das die menschliche Sprache oder eine Interaktion einer Person mit einem Gegenstand betrifft, beispielsweise Trittgeräusche, das Betätigen eines Fensters oder einer Tür, oder das Verrücken von Möbeln.

Das Aufnehmen kann das zyklische Hinterlegen des aufgenommenen akustischen Signals auf einem lokalen Server oder auf einer lokalen Datenbank des Gebäudeautomationssystems aufweisen, wobei das Auswerten der auf dem lokalen Server beziehungsweise der lokalen Datenbank hinterlegten akustischen Signale ausschließlich auf dem lokalen Server beziehungsweise der lokalen Datenbank durchgeführt wird.

Gemäß einem anderen Aspekt der Erfindung wird ein Gebäudeautomationssystem mit einer Vielzahl Aktoren und/oder Sensoren beschrieben, die über ein Gebäudenetzwerk kommunikativ miteinander verbunden sind. Das Gebäudenetzwerk kann mindestens eine lokale Datenbank und mindestens ein Mikrofon aufweisen, wobei das Mikrofon dazu eingerichtet ist, ein akustisches Signal aufzunehmen. Das Gebäudenetzwerk kann weiterhin dazu eingerichtet sein, das akustische Signal auf das Vorliegen mindestens eines akustischen Fingerabdrucks auszuwerten, wozu das aufgenommene Signal auf eine Übereinstimmung mit in einer Datenbank des Gebäudeautomationssystems hinterlegten, jeweils einem akustischen Fingerabdruck zugeordneten Referenzsignalen abgeglichen wird. Weiterhin kann das Gebäudenetzwerk dazu eingerichtet sein, bei einem durch das Auswerten erkannten akustischen Fingerabdruck mindestens einem dem erkannten akustischen Fingerabdruck zugeordneten Steuerbefehl an mindestens einen der Sensoren oder Aktoren weiterzuleiten.

Das Gebäudeautomationssystem kann weiterhin einen akustischen Filter aufweisen, der dazu eingerichtet ist, einen Störabstand zwischen einem einen akustischen Fingerabdruck aufweisenden akustischen Signal und einem Hintergrundrauschen zu erhöhen.

Das Gebäudeautomationssystem kann weiterhin einen Transformator aufweisen, der dazu eingerichtet ist, das aufgenommene akustische Signal in den Bildbereich zu transformieren. Ein Korrelater des Gebäudeautomationssystems kann dazu eingerichtet sein, das aufgenommene akustische Signal oder ein daraus in den Bildbereich transformiertes Signal mit in den Bildbereich transformierten Referenzmustern der Referenzsignale zu korrelieren. Ein Selektor des Gebäudeautomationssystems kann dazu eingerichtet sein, zur Bestimmung des Referenzsignals das Referenzmuster mit der größten Übereinstimmung mit dem in den Bildbereich transformierten akustischen Signal auszuwählen.

Es werden somit ein Verfahren sowie ein Gebäudeautomationssystem beschrieben, die es ermöglichen, Personen in einem Raum eines Gebäudes anhand ihrer individuellen personenspezifischen Geräusche zu identifizieren und eine benutzerabhängige Ansteuerung des Gebäudeautomationssystems auszulösen. Hierbei werden insbesondere akustische Eigenarten der Personen ausgewertet, mithin akustische Fingerabdrücke, die sich aus den Bewegungen ergeben können, wie zum Beispiel Schrittgeräusche, aber auch Husten, die Nutzung bestimmter Geräte und nicht zuletzt das gesprochene Wort. Die Erkennung bzw. Auswertung kann mit Hilfe künstlicher Intelligenz erfolgen. Ein besonderer Vorteil der Erfindung liegt darin, dass die Auswertung lokal auf einem Gerät in einem lokalen Netzwerk ausgeführt werden kann, welches insbesondere Bestandteil des Gebäudeautomationssystems sein kann. Es werden somit insbesondere keine Cloud-basierten Dienste angewendet.

Mit der Erfindung können die Funktionen im Bereich eines Smart Homes bzw. in der Gebäudeautomation auf einzelne Anwender zugeschnitten werden. Dazu ist die Identifikation der betreffenden Anwender erforderlich. Durch die Kenntnis der Präsenz mindestens einer Person, aber auch einer bestimmten Gruppe von Personen, die auch für das Gebäudeautomationssystem unbekannte Personen aufweisen kann, die nicht über einen akustischen Fingerabdruck identifizierbar sind, können Automationsmechanismen des Smart Homes bzw. des Gebäudeautomationssystems anwenderspezifisch zugeschnitten werden.

Weitere Einzelheiten der Erfindung werden anhand der nachstehenden Figuren erläutert. Dabei zeigt:
- Figur 1: eine beispielhafte Ausführungsform eines Gebäudeautomationssystems; und
- Figur 2: in schematischer Darstellung eine weitere Ausführungsform der Vorrichtung für die Auswertung von akustischen Fingerabdrücken sowie die Erzeugung von Steuerbefehlen.

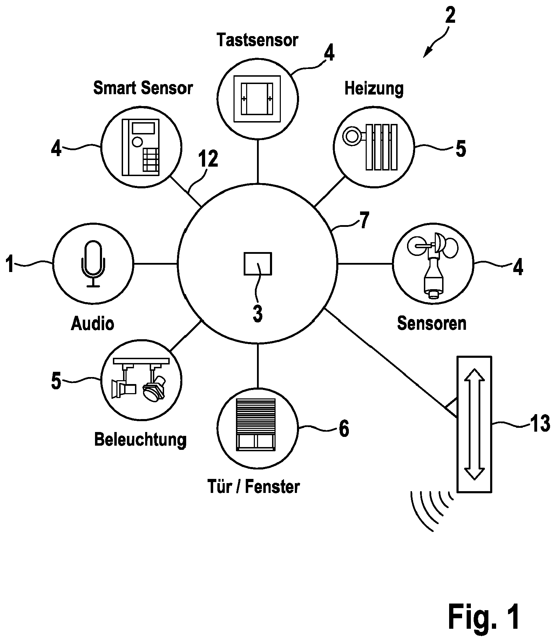

Die Figur 1 zeigt eine beispielhafte Ausführungsform eines erfindungsgemäßen Gebäudeautomationssystems 2. Das Gebäudeautomationssystem 2 besteht im Wesentlichen aus einem Server 7, der beispielsweise ein Homeserver eines KNX-Bussystems sein kann. Auf dem Server 7 kann eine Datenbank 3 in einem Speicher des Servers 7 hinterlegt sein. Über ein Gebäudenetzwerk 12, welches beispielsweise ein drahtgebundenes und/oder ein drahtloses KNX-Netzwerk sein kann, sind Sensoren 4 und Aktoren 5, 6 mit dem Server 7 und untereinander verbunden. Ein Busankoppler 13 ist dazu eingerichtet, Drahtlosgeräte in das Gebäudenetzwerk 12 zu integrieren, beispielsweise weitere Sensoren/Aktoren mit einer Funkschnittstelle oder ein mobiles Endgerät für die Steuerung des Gebäudeautomationssystems 2. Die in Figur 1 beispielhaft gezeigten Sensoren 4 und Aktoren 5, 6 sind auf keine bestimmten Ausführungsformen beschränkt und sind daher lediglich beispielhaft.

Erfindungsgemäß weist das Gebäudeautomationssystem 2 mindestens ein Mikrofon 1 auf, welches beispielsweise in einem Raum eines Gebäudes an einer Wand angeordnet sein kann, um in dem Raum erzeugte akustische Signale wie Geräusche und/oder Sprache aufzunehmen. Über das Mikrofon 1 aufgenommene akustische Signale sollen erfindungsgemäß auf das Vorliegen mindestens eines akustischen Fingerabdrucks ausgewertet werden. Diese Auswertung kann computerimplementiert auf dem Server 7 erfolgen. Der Server 7 kann insbesondere als ein lokaler Server ausgebildet sein, welcher entweder ohne jegliche Datenschnittstelle zu einem Endgerät außerhalb des Gebäudeautomationssystems 2 ausgebildet ist oder lediglich über eine verschlüsselte Schnittstelle an die Außenwelt angekoppelt ist. Vorzugsweise ist das Gebäudeautomationssystem 2 jedoch ein in sich geschlossenes System ohne eine Schnittstelle zu einem externen Gerät, beispielsweise zu einem externen Server, so dass eine Manipulation des Gebäudeautomationssystems 2 von außerhalb, beispielsweise von einer Entität, die sich außerhalb des Gebäudes, in welchem das Gebäudeautomationssystem 2 implementiert ist, befindet, ausgeschlossen ist.

Für das Auswerten des akustischen Signals auf das Vorliegen mindestens eines akustischen Fingerabdrucks kann das aufgenommene Signal auf eine Übereinstimmung mit in einer Datenbank 3 des Gebäudeautomationssystems 2 hinterlegten, jeweils einem akustischen Fingerabdruck zugeordneten Referenzsignalen abgeglichen werden. Die Datenbank 3 kann insbesondere lokal in einem Speicher des Servers 7 manipulationssicher hinterlegt sein.

Die Erfindung zielt darauf ab, die Ansteuerung des Gebäudeautomationssystems 2 für einen Anwender zu erleichtern, insbesondere dann, wenn das Gebäudeautomationssystem 2 vielfältige Einstellmöglichkeiten aufweist und sich für einen individuellen Anwender ermitteln lässt, dass dieser regelmäßig gleichartige Steuerbefehle, beispielsweise durch manuelle Interaktion mit dem Gebäudeautomationssystem erzeugt. So kann beispielsweise dem akustischen Fingerabdruck mindestens ein Steuerbefehl zugeordnet werden, welcher auf die Erzielung einer bestimmten Beschattungsszene durch die Ansteuerung der Aktorik von Beschattungselementen ausgerichtet ist. Der Steuerbefehl kann alternativ oder zusätzlich die Realisierung einer bestimmten Beleuchtungsszene durch Ansteuerung mindestens eines Beleuchtungsaktors umfassen. Darüber hinaus kann die Ansteuerung eines Heizungsventilaktors für die Erzielung einer gewünschten Raumtemperatur vorgesehen sein. Die zuvor genannten Steuerbefehle, Aktoren und Sensoren sind lediglich beispielhaft und die Erfindung soll nicht auf die Verwendung dieser beschränkt werden.

Das Verfahren kann weiterhin das Aufnehmen eines Störsignals mit einem unspezifischen Frequenzspektrum aufweisen, beispielsweise ein Umgebungsrauschen, wie etwa Verkehrsrauschen. Das unspezifische Frequenzspektrum kann sich beispielsweise durch eine hohe Bandbreite sowie eine niedrige Signalamplitude auszeichnen. Insbesondere kann zu dem unspezifischen Frequenzspektrum kein übereinstimmendes Referenzsignal in der Datenbank hinterlegt sein, so dass es zumindest nicht als ein akustisches Signal erkannt wird, welches einen akustischen Fingerabdruck aufweist. Es kann nunmehr vorgesehen sein, dass bei dem Überschreiten einer Schwellsignalamplitude des Störsignals ein Tür- oder Fensteraktor des Gebäudeautomationssystems angesteuert wird, mindestens eine Tür und/oder ein Fenster des Gebäudeautomationssystems zu schließen.

Weiterhin kann vorgesehen sein, dass auch für wiederkehrende, unerwünschte akustische Signale, beispielsweise Verkehrsrauschen, ein charakteristischer akustischer Fingerabdruck in der Datenbank hinterlegt wird, wobei dieser akustische Fingerabdruck dann mit einem Steuerbefehl verknüpft ist, welcher auf die Ansteuerung mindestens eines Tür- und/oder Fensteraktors 6 ausgerichtet ist, um die betreffende Tür und/oder das betreffende Fenster zu schließen, wenn die Auswertung des akustischen Signals eine entsprechende Übereinstimmung mit dem akustischen Fingerabdruck ergeben hat.

Dabei kann in dem Fall, dass die Signalamplitude des Störsignals die Schwellsignalamplitude unterschreitet, keine weitere Ansteuerung des Tür- oder Fensteraktors vorgesehen sein und insbesondere das mindestens eine Fenster oder die mindestens eine Tür geschlossen gehalten werden.

In dem Fall, dass die Signalamplitude nach dem Schließen des Fensters oder der Tür die Schwellsignalamplitude nicht unterschreitet, jedoch geringer geworden ist, kann mindestens eine weitere Tür oder mindestens ein weiteres Fenster durch entsprechende Ansteuerung des betreffenden Tür- oder Fensteraktors 5 angesteuert werden. Es kann insbesondere vorgesehen sein, dass sukzessive, das heißt nacheinander, einzelne Türen und/oder Fenster oder Gruppen von Türen und/oder Fenstern geschlossen werden, bis die Signalamplitude des Störsignals die Schwellsignalamplitude unterschreitet. Wenn die Signalamplitude des Störsignals nach dem Schließen nicht oder nicht wesentlich geringer als vor dem Schließen ist, kann der für das Schließen angesteuerte Aktor nochmals angesteuert werden, die betreffende Tür und/oder das betreffende Fenster wieder zu öffnen, da die Schließung der Tür beziehungsweise des Fensters keinen Einfluss auf die Signalamplitude des Störsignals und damit keine Verbesserung für einen Anwender in dem betreffenden Raum hervorgerufen hat.

Die Auswertung akustischer Fingerabdrücke kann insbesondere auch dazu dienen, die Ansteuerqualität des Gebäudeautomationssystems zu verbessern, wenn eine Ansteuerung des Gebäudeautomationssystems 2 durch Sprachbefehle vorgesehen ist. Die Verbesserung der Ansteuerqualität durch Sprachbefehle kann einerseits dadurch erreicht werden, dass ein erkannter akustischer Fingerabdruck, beispielsweise ein anwenderspezifisches Schrittgeräusch, dazu verwendet wird, aus einer Vielzahl möglicher Steuerbefehle, welche ein Gebäudeautomationssystem 2 zulässt, eine Untergruppe von dem betreffenden Anwender bevorzugter Steuerbefehle vorauszuwählen, so dass bei einer anschließenden Spracherkennung zur Bestimmung des von einem Anwender ausgesprochenen Sprachbefehls aus einer kleineren Teilmenge möglicher Sprachbefehle der tatsächlich gesprochene Sprachbefehl durch Abgleich ausgewählt werden kann.

Alternativ oder zusätzlich kann vorgesehen sein, dass der erkannte und einem Anwender spezifisch zugeordnete Fingerabdruck dazu verwendet wird, ein in der Datenbank 3 hinterlegtes, anwenderspezifisches Sprachprofil aufzurufen, welches bei der Auswertung des Sprachbefehls, nachdem dieser über das Mikrofon 1 erfasst worden ist, zugrunde gelegt wird.

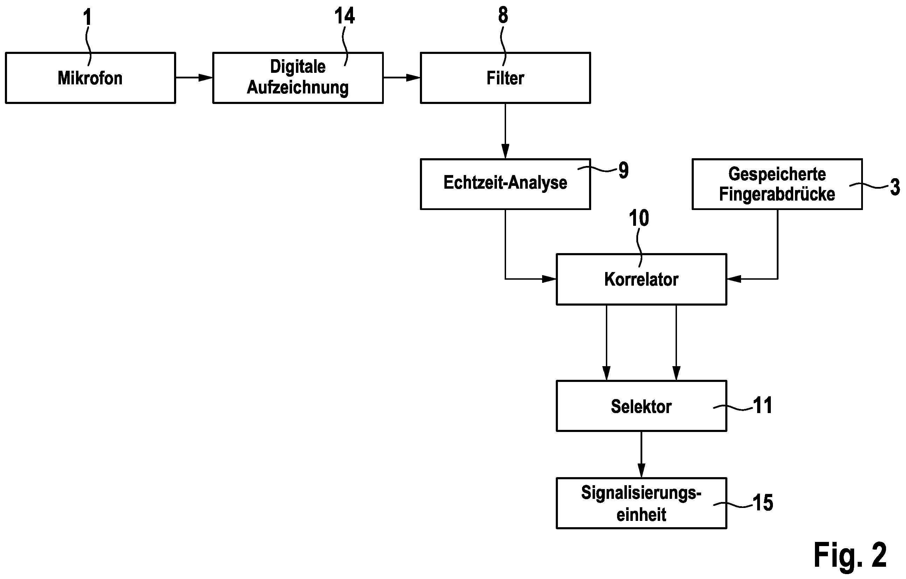

Die Figur 2 zeigt in schematischer Darstellung die wesentlichen Baugruppen einer beispielhaften Vorrichtung für die Auswertung akustischer Fingerabdrücke zur Erzeugung von Steuerbefehlen zur Ansteuerung eines Gebäudeautomationssystems, wie es beispielsweise in Figur 1 gezeigt ist.

Über ein Mikrofon 1, welches beispielsweise ein Sensor des Gebäudeautomationssystems 2 gemäß Figur 1 sein kann, werden Geräusche in einem Raum des Gebäudes aufgenommen und in einem Speicher 14 hinterlegt, der der Speicher einer Datenbank sein kann. Demgemäß kann der Speicher 14 beispielsweise in einem Homeserver 7 eines KNX-Netzwerks vorgesehen sein. Ein Filter 8 kann dazu vorgesehen sein, die in dem Speicher 14 hinterlegten akustischen Signale dahingehend zu bearbeiten, dass der Störabstand zu einem erkannten Nutzsignal vergrößert wird.

In einer Datenbank 3 sind Referenzfingerabdrücke gespeichert. Eine Einrichtung zur akustischen Echtzeitanalyse auf Spektralbasis weist insbesondere einen Transformator 9 auf, über den eine Transformation der akustischen Signale in den Bildbereich erhalten wird, wodurch Schallereignisse mit Referenzmustern aus den gespeicherten akustischen Fingerabdrücken, welche auf der Datenbank 3 hinterlegt sind, abgeglichen werden können.

Durch unscharfe Korrelation in dem Korrelater 10 werden die Wahrscheinlichkeiten für eine jeweilige Übereinstimmung mit den in der Datenbank 3 hinterlegten Referenzfingerabdrücken berechnet und gegebenenfalls eine Qualifizierung der Zuverlässigkeit eines ermittelten Treffers im Selektor 11 durchgeführt. Dies kann die Ermittlung einer jeweiligen Übereinstimmung des in den Bildbereich transformierten gemessenen akustischen Signals mit den Mustern der Referenzsignale aufweisen. Der wahrscheinlichste Treffer wird über eine Signalisierungseinheit 15 in das Gebäudeautomationssystem 2, insbesondere in das Gebäudenetzwerk 12 eingespeist, wenn die ermittelte Treffergenauigkeit einen definierten Mindestschwellwert übersteigt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Mikrofon
- 2: Gebäudeautomationssystem
- 3: Datenbank
- 4: Sensor
- 5: Aktor
- 6: Tür- oder Fensteraktor
- 7: Server
- 8: Filter
- 9: Transformator
- 10: Korrelater
- 11: Selektor
- 12: Gebäudenetzwerk
- 13: Busankoppler
- 14: Speicher
- 15: Signalisierungseinheit

## Patentansprüche

1. Verfahren für die Gebäudeautomation, das die Schritte aufweist:
- Aufnehmen eines akustischen Signals in einem Raum eines Gebäudes über ein Mikrofon (1) eines Gebäudeautomationssystems (2), und
- Auswerten des akustischen Signals auf das Vorliegen mindestens eines akustischen Fingerabdrucks, wozu das aufgenommene Signal auf eine Übereinstimmung mit in einer Datenbank (3) des Gebäudeautomationssystems (2) hinterlegten, jeweils einem akustischen Fingerabdruck zugeordneten Referenzsignalen abgeglichen wird,
**dadurch gekennzeichnet, dass** bei einem bei dem Auswerten erkannten akustischen Fingerabdruck auf die Präsenz einer Person in dem Raum geschlossen und eine die Personenpräsenz repräsentierende Information in einer Datenbank (3) des Gebäudeautomationssystems (2) hinterlegt wird.

2. Verfahren nach Anspruch 1, wobei bei einem erkannten akustischen Fingerabdruck mindestens ein dem erkannten akustischen Fingerabdruck zugeordneter Steuerbefehl unmittelbar an einen Sensor (4) oder Aktor (5) des Gebäudeautomationssystems (2) weitergeleitet oder in der Datenbank (3) zwischengespeichert und zu einem späteren Zeitpunkt an den Sensor (4) oder den Aktor (5) weitergeleitet wird.

3. Verfahren nach Anspruch 1 oder 2, bei dem sämtliche Verfahrensschritte des Auswertens des akustischen Signals auf einer lokalen Datenbank (3) des Gebäudeautomationssystems (2) durchgeführt werden.

4. Verfahren nach Anspruch 1 oder 2, das das Erzeugen mindestens eines Benutzerprofils des Gebäudeautomationssystems (2) aufweist, das über den akustischen Fingerabdruck eindeutig identifiziert ist, wobei das Erzeugen des Benutzerprofils das Aufnehmen des akustischen Signals über das Mikrofon (1) und das Zuordnen des aufgenommenen Signals zu mindestens einem Steuerbefehl, vorzugsweise eine Vielzahl Steuerbefehle, zur Ansteuerung mindestens eines Sensors (4) und/oder Aktors (5) des Gebäudeautomationssystems (2) aufweist.

5. Verfahren nach Anspruch 4, das das Auswählen eines Benutzerprofils aufweist, wozu über das Mikrofon (1) das den akustischen Fingerabdruck aufweisende akustische Signal aufgenommen wird, das das Benutzerprofil eindeutig identifiziert.

6. Verfahren nach Anspruch 4 oder 5, bei dem das Erzeugen des Benutzerprofils das Zuordnen des aufgenommenen akustischen Signals zu einer Mehrzahl Steuerbefehle zur Ansteuerung mindestens eines Sensors (4) und/oder Aktors (5) des Gebäudeautomationssystems (2) aufweist, wobei das Verfahren weiterhin nach dem Auswählen eines Benutzerprofils das Auswählen mindestens eines der Mehrzahl Steuerbefehle über einen Sprachbefehl aufweist.

7. Verfahren nach einem der Ansprüche 4 bis 6, das das Zuweisen eines Sprachprofils zu dem mindestens einen Benutzerprofil aufweist, wobei nach dem Auswählen eines Benutzerprofils das Auswählen mindestens eines der Mehrzahl Steuerbefehle über einen Sprachbefehl aufweist, wobei das Auswählen das Auswerten des Sprachbefehls unter Zugrundelegung des Sprachprofils aufweist.

8. Verfahren nach einem der vorangegangenen Ansprüche, bei dem das Aufnehmen eines akustischen Signals das Aufnehmen eines Störsignals mit einem unspezifischen Frequenzspektrum aufweist, zu dem kein übereinstimmendes Referenzsignal in der Datenbank (3) hinterlegt ist, aufweist, wobei bei dem Überschreiten einer Schwellsignalamplitude des Störsignals ein Tür- oder Fensteraktor (6) des Gebäudeautomationssystems (2) dazu angesteuert wird, mindestens eine Tür und/oder mindestens ein Fenster des Gebäudeautomationssystems (2) zu schließen.

9. Verfahren nach Anspruch 8, bei dem nach dem Schließen verifiziert wird, ob eine Signalamplitude des Störsignals die Schwellsignalamplitude unterschreitet oder zumindest geringer als vor dem Schließen geworden ist, wobei
a. in dem Fall, dass die Signalamplitude des Störsignals die Schwellsignalamplitude unterschreitet, keine weitere Ansteuerung des Tür- oder Fensteraktors (6) erfolgt und das mindestens eine Fenster oder die mindestens eine Tür geschlossen gehalten wird;
b. in dem Fall, dass die Signalamplitude des Störsignals die Schwellsignalamplitude nicht unterschreitet, jedoch geringer geworden ist, mindestens ein weiterer Tür- oder Fensteraktor (5) des Gebäudeautomationssystems (2) dazu angesteuert wird, sukzessive mindestens eine weitere Tür und/oder mindestens ein weiteres Fenster des Gebäudeautomationssystems (2) zu schließen, bis die Signalamplitude des Störsignals die Schwellsignalamplitude unterschreitet;
c. in dem Fall, dass die Signalamplitude des Störsignals nach dem Schließen nicht oder nicht wesentlich geringer als vor dem Schließen ist, der für das Schließen angesteuerte Aktor (5) angesteuert wird, die mindestens eine Tür und/oder das mindestens eine Fenster des Gebäudeautomationssystems (2) wieder zu öffnen.

10. Verfahren nach einem der vorangegangenen Ansprüche, bei dem bei dem Auswerten ein akustischer Fingerabdruck, vorzugsweise ein Schrittgeräusch, erkannt wird, dem vorzugsweise eine Gruppe von mehreren Steuerbefehlen aus einer Vielzahl möglicher Steuerbefehle zugeordnet ist, wobei die mehreren Steuerbefehle aus der Vielzahl möglicher Steuerbefehle vorausgewählt werden, und wobei nach dem Erkennen des akustischen Fingerabdrucks ein Sprachbefehl ausgewertet wird, über den mindestens einer der mehreren Steuerbefehle aus der Vielzahl möglicher Steuerbefehle ausgewählt wird.

11. Verfahren nach einem der vorangegangenen Ansprüche, bei dem das Abgleichen des aufgenommenen akustischen Signals das Transformieren des aufgenommenen akustischen Signals in den Bildbereich und das Vergleichen des in den Bildbereich transformierten Signals mit einem in den Bildbereich transformierten Referenzmuster des Referenzsignals aufweist.

12. Verfahren nach einem der vorangegangenen Ansprüche, bei dem das Abgleichen des aufgenommenen akustischen Signals das Korrelieren des Signals oder eines daraus in den Bildbereich transformierten Signals mit in den Bildbereich transformierten Referenzmustern der Referenzsignale aufweist, von denen zur Bestimmung des Referenzsignals das Referenzmuster mit der größten Übereinstimmung mit dem in den Bildbereich transformierten akustischen Signal ermittelt wird.

13. Verfahren nach Anspurch 11 oder 12, bei dem das Referenzsignal sowie gegebenenfalls ein daraus in den Bildbereich transformiertes Referenzmuster ein Referenzsignal bzw. Referenzmuster ist, das die menschliche Sprache oder eine Interaktion einer Person mit einem Gegenstand betrifft, beispielsweise das Betätigen eines Fensters oder einer Tür, oder das Verrücken von Möbeln.

14. Verfahren nach einem der vorangegangenen Ansprüche, bei dem das Aufnehmen das zyklische Hinterlegen des aufgenommenen akustischen Signals auf einem lokalen Server (7) des Gebäudeautomationssystems (2) aufweist, wobei das Auswerten der auf dem lokalen Server (7) hinterlegten akustischen Signale ausschließlich auf dem lokalen Server (7) durchgeführt wird.

15. Gebäudeautomationssystem (2) mit einer Vielzahl Aktoren (5) und/oder Sensoren (4), die über ein Gebäudenetzwerk (12) kommunikativ miteinander verbunden sind, wobei das Gebäudenetzwerk (12) mindestens eine lokale Datenbank (3) und mindestens ein Mikrofon (1) aufweist, das dazu eingerichtet ist, ein akustisches Signal aufzunehmen, wobei das Gebäudenetzwerk (12) dazu eingerichtet ist, das akustische Signal auf das Vorliegen mindestens eines akustischen Fingerabdrucks auszuwerten, wozu das aufgenommene Signal auf eine Übereinstimmung mit in einer Datenbank (3) des Gebäudeautomationssystems (2) hinterlegten, jeweils einem akustischen Fingerabdruck zugeordneten Referenzsignalen abgeglichen wird, und wobei das Gebäudenetzwerk (12) weiterhin dazu eingerichtet ist, bei einem durch das Auswerten erkannten akustischen Fingerabdruck mindestens einen dem erkannten akustischen Fingerabdruck zugeordneten Steuerbefehl an mindestens einen der Sensoren (4) oder Aktoren (5) weiterzuleiten.

16. Gebäudeautomationssystem (2) nach Anspruch 15, das weiterhin einen akustischen Filter (8) aufweist, der dazu eingerichtet ist, einen Störabstand zwischen einem einen akustischen Fingerabdruck aufweisenden akustischen Signal und einem Hintergrundrauschen zu erhöhen.

17. Gebäudeautomationssystem (2) nach Anspruch 15 oder 16, das weiterhin einen Transformator (9) aufweist, der dazu eingerichtet ist, das aufgenommene akustische Signal in den Bildbereich zu transformieren, wobei ein Korrelater (10) des Gebäudeautomationssystem (2) dazu eingerichtet ist, das aufgenommene akustische Signal oder ein daraus in den Bildbereich transformiertes Signal mit in den Bildbereich transformierten Referenzmustern der Referenzsignale zu korrelieren, wobei von einem Selektor (11) zur Bestimmung des Referenzsignals das Referenzmuster mit der größten Übereinstimmung mit dem in den Bildbereich transformierten akustischen Signal ausgewählt wird.

## Geänderte Patentansprüche

### Geänderte Patentansprüche gemäss Regel 137(2) EPÜ.

1. Verfahren für die Gebäudeautomation, das die Schritte aufweist:
- Aufnehmen eines akustischen Signals in einem Raum eines Gebäudes über ein Mikrofon (1) eines Gebäudeautomationssystems (2), und
- Auswerten des akustischen Signals auf das Vorliegen mindestens eines akustischen Fingerabdrucks, wozu das aufgenommene Signal auf eine Übereinstimmung mit in einer Datenbank (3) des Gebäudeautomationssystems (2) hinterlegten, jeweils einem akustischen Fingerabdruck zugeordneten Referenzsignalen abgeglichen wird,
wobei bei einem bei dem Auswerten erkannten akustischen Fingerabdruck auf die Präsenz einer Person in dem Raum geschlossen und eine die Personenpräsenz repräsentierende Information in einer Datenbank (3) des Gebäudeautomationssystems (2) hinterlegt wird,
**dadurch gekennzeichnet, dass** bei einem erkannten akustischen Fingerabdruck mindestens ein dem erkannten akustischen Fingerabdruck zugeordneter Steuerbefehl unmittelbar an einen Sensor (4) oder Aktor (5) des Gebäudeautomationssystems (2) weitergeleitet oder in der Datenbank (3) zwischengespeichert und zu einem späteren Zeitpunkt an den Sensor (4) oder den Aktor (5) weitergeleitet wird,
wobei der akustische Fingerabdruck nicht von der menschlichen Stimme erzeugte Geräusche umfasst.

2. Verfahren nach Anspruch 1, bei dem sämtliche Verfahrensschritte des Auswertens des akustischen Signals auf einer lokalen Datenbank (3) des Gebäudeautomationssystems (2) durchgeführt werden.

3. Verfahren nach Anspruch 1, das das Erzeugen mindestens eines Benutzerprofils des Gebäudeautomationssystems (2) aufweist, das über den akustischen Fingerabdruck eindeutig identifiziert ist, wobei das Erzeugen des Benutzerprofils das Aufnehmen des akustischen Signals über das Mikrofon (1) und das Zuordnen des aufgenommenen Signals zu mindestens einem Steuerbefehl, vorzugsweise eine Vielzahl Steuerbefehle, zur Ansteuerung mindestens eines Sensors (4) und/oder Aktors (5) des Gebäudeautomationssystems (2) aufweist.

4. Verfahren nach Anspruch 3, das das Auswählen eines Benutzerprofils aufweist, wozu über das Mikrofon (1) das den akustischen Fingerabdruck aufweisende akustische Signal aufgenommen wird, das das Benutzerprofil eindeutig identifiziert.

5. Verfahren nach Anspruch 3 oder 4, bei dem das Erzeugen des Benutzerprofils das Zuordnen des aufgenommenen akustischen Signals zu einer Mehrzahl Steuerbefehle zur Ansteuerung mindestens eines Sensors (4) und/oder Aktors (5) des Gebäudeautomationssystems (2) aufweist, wobei das Verfahren weiterhin nach dem Auswählen eines Benutzerprofils das Auswählen mindestens eines der Mehrzahl Steuerbefehle über einen Sprachbefehl aufweist.

6. Verfahren nach einem der Ansprüche 3 bis 5, das das Zuweisen eines Sprachprofils zu dem mindestens einen Benutzerprofil aufweist, wobei nach dem Auswählen eines Benutzerprofils das Auswählen mindestens eines der Mehrzahl Steuerbefehle über einen Sprachbefehl aufweist, wobei das Auswählen das Auswerten des Sprachbefehls unter Zugrundelegung des Sprachprofils aufweist.

7. Verfahren nach einem der vorangegangenen Ansprüche, bei dem das Aufnehmen eines akustischen Signals das Aufnehmen eines Störsignals mit einem unspezifischen Frequenzspektrum aufweist, zu dem kein übereinstimmendes Referenzsignal in der Datenbank (3) hinterlegt ist, aufweist, wobei bei dem Überschreiten einer Schwellsignalamplitude des Störsignals ein Tür- oder Fensteraktor (6) des Gebäudeautomationssystems (2) dazu angesteuert wird, mindestens eine Tür und/oder mindestens ein Fenster des Gebäudeautomationssystems (2) zu schließen.

8. Verfahren nach Anspruch 7, bei dem nach dem Schließen verifiziert wird, ob eine Signalamplitude des Störsignals die Schwellsignalamplitude unterschreitet oder zumindest geringer als vor dem Schließen geworden ist, wobei
a. in dem Fall, dass die Signalamplitude des Störsignals die Schwellsignalamplitude unterschreitet, keine weitere Ansteuerung des Tür- oder Fensteraktors (6) erfolgt und das mindestens eine Fenster oder die mindestens eine Tür geschlossen gehalten wird;
b. in dem Fall, dass die Signalamplitude des Störsignals die Schwellsignalamplitude nicht unterschreitet, jedoch geringer geworden ist, mindestens ein weiterer Tür- oder Fensteraktor (5) des Gebäudeautomationssystems (2) dazu angesteuert wird, sukzessive mindestens eine weitere Tür und/oder mindestens ein weiteres Fenster des Gebäudeautomationssystems (2) zu schließen, bis die Signalamplitude des Störsignals die Schwellsignalamplitude unterschreitet;
c. in dem Fall, dass die Signalamplitude des Störsignals nach dem Schließen nicht oder nicht wesentlich geringer als vor dem Schließen ist, der für das Schließen angesteuerte Aktor (5) angesteuert wird, die mindestens eine Tür und/oder das mindestens eine Fenster des Gebäudeautomationssystems (2) wieder zu öffnen.

9. Verfahren nach einem der vorangegangenen Ansprüche, bei dem bei dem Auswerten ein akustischer Fingerabdruck, vorzugsweise ein Schrittgeräusch, erkannt wird, dem vorzugsweise eine Gruppe von mehreren Steuerbefehlen aus einer Vielzahl möglicher Steuerbefehle zugeordnet ist, wobei die mehreren Steuerbefehle aus der Vielzahl möglicher Steuerbefehle vorausgewählt werden, und wobei nach dem Erkennen des akustischen Fingerabdrucks ein Sprachbefehl ausgewertet wird, über den mindestens einer der mehreren Steuerbefehle aus der Vielzahl möglicher Steuerbefehle ausgewählt wird.

10. Verfahren nach einem der vorangegangenen Ansprüche, bei dem das Abgleichen des aufgenommenen akustischen Signals das Transformieren des aufgenommenen akustischen Signals in den Bildbereich und das Vergleichen des in den Bildbereich transformierten Signals mit einem in den Bildbereich transformierten Referenzmuster des Referenzsignals aufweist.

11. Verfahren nach einem der vorangegangenen Ansprüche, bei dem das Abgleichen des aufgenommenen akustischen Signals das Korrelieren des in den Bildbereich transformierten Signals mit in den Bildbereich transformierten Referenzmustern der Referenzsignale aufweist, von denen zur Bestimmung des Referenzsignals das Referenzmuster mit der größten Übereinstimmung mit dem in den Bildbereich transformierten akustischen Signal ermittelt wird.

12. Verfahren nach Anspruch 10 oder 11, bei dem das Referenzsignal sowie gegebenenfalls ein daraus in den Bildbereich transformiertes Referenzmuster ein Referenzsignal bzw. Referenzmuster ist, das die menschliche Sprache oder eine Interaktion einer Person mit einem Gegenstand betrifft, beispielsweise das Betätigen eines Fensters oder einer Tür, oder das Verrücken von Möbeln.

13. Verfahren nach einem der vorangegangenen Ansprüche, bei dem das Aufnehmen das zyklische Hinterlegen des aufgenommenen akustischen Signals auf einem lokalen Server (7) des Gebäudeautomationssystems (2) aufweist, wobei das Auswerten der auf dem lokalen Server (7) hinterlegten akustischen Signale ausschließlich auf dem lokalen Server (7) durchgeführt wird.

14. Gebäudeautomationssystem (2) mit einer Vielzahl Aktoren (5) und/oder Sensoren (4), die über ein Gebäudenetzwerk (12) kommunikativ miteinander verbunden sind, wobei das Gebäudenetzwerk (12) mindestens eine lokale Datenbank (3) und mindestens ein Mikrofon (1) aufweist, das dazu eingerichtet ist, ein akustisches Signal aufzunehmen, wobei das Gebäudenetzwerk (12) dazu eingerichtet ist, das akustische Signal auf das Vorliegen mindestens eines akustischen Fingerabdrucks auszuwerten, wozu das aufgenommene Signal auf eine Übereinstimmung mit in einer Datenbank (3) des Gebäudeautomationssystems (2) hinterlegten, jeweils einem akustischen Fingerabdruck zugeordneten Referenzsignalen abgeglichen wird, und wobei das Gebäudenetzwerk (12) weiterhin dazu eingerichtet ist, bei einem durch das Auswerten erkannten akustischen Fingerabdruck mindestens einen dem erkannten akustischen Fingerabdruck zugeordneten Steuerbefehl an mindestens einen der Sensoren (4) oder Aktoren (5) weiterzuleiten, wobei der akustische Fingerabdruck nicht von der menschlichen Stimme erzeugte Geräusche umfasst.

15. Gebäudeautomationssystem (2) nach Anspruch 14, das weiterhin einen akustischen Filter (8) aufweist, der dazu eingerichtet ist, einen Störabstand zwischen einem einen akustischen Fingerabdruck aufweisenden akustischen Signal und einem Hintergrundrauschen zu erhöhen.

16. Gebäudeautomationssystem (2) nach Anspruch 14 oder 15, das weiterhin einen Transformator (9) aufweist, der dazu eingerichtet ist, das aufgenommene akustische Signal in den Bildbereich zu transformieren, wobei ein Korrelater (10) des Gebäudeautomationssystem (2) dazu eingerichtet ist, das aufgenommene akustische Signal oder ein daraus in den Bildbereich transformiertes Signal mit in den Bildbereich transformierten Referenzmustern der Referenzsignale zu korrelieren, wobei von einem Selektor (11) zur Bestimmung des Referenzsignals das Referenzmuster mit der größten Übereinstimmung mit dem in den Bildbereich transformierten akustischen Signal ausgewählt wird.
